(19) **Europäisches Patentamt / European Patent Office / Office européen des brevets**

(11) **EP 2 764 415 B1**

(12) **FASCICULE DE BREVET EUROPEEN**

(45) Date de publication et mention de la délivrance du brevet:
**18.12.2019 Bulletin 2019/51**

(21) Numéro de dépôt: **12769095.6**

(22) Date de dépôt: **04.10.2012**

(51) Int Cl.:
**B64C 1/06** *(2006.01)*    **B64C 1/00** *(2006.01)*
**B64F 5/10** *(2017.01)*    **G06F 17/50** *(2006.01)*
**G05B 19/4097** *(2006.01)*

(86) Numéro de dépôt international:
**PCT/EP2012/069583**

(87) Numéro de publication internationale:
**WO 2013/050444 (11.04.2013 Gazette 2013/15)**

(54) **PROCÉDÉ POUR L'OPTIMISATION DU TOLÉRANCEMENT D'UN ENSEMBLE DE PIECES FLEXIBLES SOUMISES A DES EFFORTS**

VERFAHREN ZUR OPTIMIERUNG DER TOLERIERUNG EINES SATZES VON EINER KRAFT UNTERWORFENEN FLEXIBLEN TEILEN

METHOD FOR OPTIMIZING THE TOLERANCING OF A SET OF FLEXIBLE PARTS SUBJECTED TO FORCES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.10.2011 FR 1159095**

(43) Date de publication de la demande:
**13.08.2014 Bulletin 2014/33**

(73) Titulaires:
• **AIRBUS (SAS)**
  **31700 Blagnac (FR)**
• **Ecole Normale Supérieure de Cachan**
  **94230 Cachan (FR)**

(72) Inventeurs:
• **FRICERO, Benoit**
  **F-78160 Marly Le Roi (FR)**
• **THIEBAUT, François**
  **F-91470 Forges Les Bains (FR)**
• **STRICHER, Alain**
  **F-88100 Saint-dié (FR)**
• **CHAMPANEY, Laurent**
  **F-92240 Malakoff (FR)**

(74) Mandataire: **Gicquel, Olivier Yves Gérard et al**
**Airbus Opérations (S.A.S)**
**XIF - M0101/1**
**316, route de Bayonne**
**31060 Toulouse Cedex (FR)**

(56) Documents cités:
**WO-A1-97/01802    FR-A1- 2 940 375**

• Alain Stricher ET AL: "Flexible tolerancing: A first step towards the use of nonlinear simulation of assembly", , 1 janvier 2010 (2010-01-01), pages 113-114, XP055026292, Extrait de l'Internet: URL:http://www.techscience.com/doi/10.3970/icces.2010.014.113.pdf [extrait le 2012-05-07]
• SODERBERG R ET AL: "Improving decision making by simulating and visualizing geometrical variation in non-rigid assemblies", CIRP ANNALS, ELSEVIER BV, NL, CH, FR, vol. 57, no. 1, 1 janvier 2008 (2008-01-01), pages 175-178, XP022674631, ISSN: 0007-8506, DOI: 10.1016/J.CIRP.2008.03.040 [extrait le 2008-05-09]

**Description**

L'invention concerne un procédé pour l'optimisation du tolérancement d'un ensemble de pièces mécaniquement flexibles, notamment soumises à des efforts. L'invention est plus particulièrement adaptée au contrôle et à l'optimisation du tolérancement de pièces dont la déformation sous l'action desdits efforts est du même ordre de grandeur que l'intervalle de tolérance de fabrication ou d'assemblage desdites pièces.

Le procédé objet de l'invention est plus particulièrement, mais non exclusivement, adapté au contrôle et à l'optimisation du tolérancement de pièces de grandes dimensions devant être assemblées selon des contraintes d'ajustement et de positionnement serrées, comme c'est le cas pour les éléments de structure d'aéronefs.

Le document XP55026292: "Flexible tolerancing: A first step towards the use of nonlinear simulation of assembly" décrit un procédé pour améliorer les outils de tolérancement avec des méthodes qui tiennent compte de la flexibilité des pièces et des dispositifs de liaison.

Il est connu de l'art antérieur, notamment du document FR-A-2940375, de calculer un positionnement optimum d'une pièce par rapport à une autre pièce à laquelle elle doit être assemblée en fonction des défauts effectifs mesurés sur une pluralité de points appartenant à chacune desdites pièces au niveau de l'interface d'assemblage. Cette méthode d'optimisation, permet l'assemblage desdites pièces dans le respect des exigences fonctionnelles en partant de mesures « *post facto* » réalisées sur les pièces réelles et concernant des points situés à l'interface. Ladite méthode permet de trouver une solution d'assemblage, c'est-à-dire un positionnement relatif des pièces l'une par rapport à l'autre et une gamme d'assemblage, y compris dans des cas où tout ou partie de points mesurés à l'interface de l'une ou l'autre pièce se situe en dehors des tolérances de fabrication. L'existence de telles situations montre que dans bon nombre de cas d'assemblage, notamment ceux qui mettent en œuvre des pièces flexibles de grande dimension, les tolérances de fabrication imposées lors des étapes précédant l'assemblage ne sont pas adaptées :

- lesdites tolérances sont trop réduites ce qui se traduit par un surcoût de fabrication en regard du besoin juste nécessaire ;
- lesdites tolérances sont trop larges ce qui se traduit par un surcoût au moment de l'assemblage.

Pour résoudre ces inconvénients de l'art antérieur, l'invention propose un procédé selon la revendication indépendante 1.

Le moteur de calcul de l'assemblage est celui présenté dans le document FR-A-2940375. Ainsi, la mise en œuvre de ce procédé permet de déterminer une tolérance optimale de fabrication des pièces, alors que celles-ci n'existent qu'au stade de la maquette numérique, en fonction des exigences fonctionnelles associées à un assemblage, en tenant compte de la flexibilité mécanique des pièces en présence. À la différence des solutions connues de l'art antérieur, où la méthode d'assemblage est déterminée en fonction de la qualité de réalisation des pièces en présence, par des mesures réalisées sur lesdites pièces, la méthode objet de l'invention fixe de manière optimale les tolérances de fabrication des pièces de sorte à, conjointement, maximiser l'espérance de l'existence d'une solution d'assemblage des pièces et à maximiser les tolérances de fabrication des pièces assemblées, donc réduire leur coût de fabrication. La fonction coût peut être de toute forme.

Dans tout le texte présent, les termes « coïncidence » et « mise en coïncidence » désignent une tentative de rapprochement spatial de points mis en relation l'un avec l'autre. La coïncidence n'est pas nécessairement réalisée à l'issue de cette opération et les points peuvent rester écartés l'un de l'autre, voir, dans certaines situations, non souhaitables mais possibles du point de vue de la simulation, conduire à une interpénétration des profils ainsi mis en coïncidence.

Le problème d'optimisation est simplifié par :

- la définition de coefficients d'influence ;
- la simulation des pièces s'écartant du nominal par un vecteur de distorsion.

Un tel vecteur de distorsion est défini par ses composantes et son point d'application sur la pièce, il est normal à la surface de la pièce et agit à la manière d'un petit déplacement imposé en ce point, lequel petit déplacement produit une déformée du milieu continu simulé par la maquette numérique de la pièce. L'identification d'un modèle linéaire réduit permet de mener l'optimisation de manière peu consommatrice en ressources de calcul tout en tenant compte d'un nombre important de configurations de variation et en assurant la convergence du calcul.

L'invention peut être mise en œuvre selon les modes de réalisation avantageux exposés ci-après lesquels peuvent être considérés individuellement ou selon toute combinaison techniquement opérante.

Avantageusement les combinaisons de vecteurs de distorsion reproduisent les modes propres de vibrations transversales de la pièce. Ainsi les déformées sont toujours mécaniquement admissibles y compris dans leurs combinaisons.

Selon un premier perfectionnement du procédé objet de l'invention adapté au cas où les points d'assemblage des deux maquettes numériques présentent des écarts tangentiels aux surfaces d'assemblage, celui-ci comprend après l'étape f) une étape consistant à :
i. réactualiser la matrice de rigidité des maquettes numériques déformées lors de la simulation de l'assemblage.

Ainsi ce mode de réalisation permet de traiter les cas de désaxement des points d'assemblage et permet notamment d'optimiser le tolérancement des pièces en vue d'un assemblage dit mécano et/ou de vérifier la faisabilité d'un tel assemblage. Un assemblage mécano est un mode d'assemblage dans lequel les alésages notamment destinés à recevoir les fixations nécessaires à l'assemblage des pièces sont pré-percés sur lesdites pièces avant que celles-ci ne soient mises en coïncidence.

Selon un deuxième perfectionnement avantageux, du procédé objet de l'invention adapté au cas où une gamme d'assemblage doit être respectée, ledit procédé comprend entre les étapes e) et f) des étapes consistant à :

> j. acquérir une gamme d'assemblage des maquettes numériques ;
>
> k. générer une pluralité de premières et deuxièmes maquettes numériques distordues par des combinaisons de vecteurs de distorsion définis à l'étape e) ;
>
> l. réaliser les assemblages des différentes maquettes numériques ainsi générées selon la gamme d'assemblage ;
>
> m. déterminer pour chaque cas d'assemblage ainsi réalisé la variable d'influence ;
>
> le calcul des coefficients d'influence de l'étape f) étant réalisé par une méthode dite de Monte Carlo, à partir des résultats de l'étape m).

Ainsi, ce mode réalisation permet de traiter tous les cas d'assemblage y compris les plus complexes, en remplaçant le calcul analytique des coefficients d'influence par un calcul statistique de ceux-ci, afin de retrouver ainsi une formulation linéaire du problème d'optimisation.

Avantageusement le procédé objet de l'invention comprend entre les étapes e) et f) des étapes consistant à :

> n. acquérir un système de positionnement initial et un système de sollicitation initial des maquettes numériques ;
>
> o. calculer le déplacement, depuis leur position initiale, des points d'assemblage et des points de structure de la maquette numérique dans son système de positionnement initial et soumise à son système de sollicitation initial.

Ainsi, selon ce mode de réalisation avantageux, le procédé objet de l'invention permet la prise en compte, au stade de la maquette numérique, de la nature réelle des dispositifs de mise en position de la pièce au cours de son assemblage, ces dispositifs de positionnement pouvant avoir une influence sur la déformation de ladite pièce.

Selon un perfectionnement de ce dernier mode de réalisation, le procédé objet de l'invention comprend, suite à l'étape f), une étape consistant à :

p. modifier le système de positionnement ou le système de chargement initial de l'étape n) et reconduire l'étape f) avec ces nouvelles conditions initiales.

Ainsi, le procédé objet de l'invention permet d'optimiser le choix des dispositifs de mise en position et des outillages d'assemblages en fonction, notamment, de la flexibilité mécanique des pièces en présence, et de la tolérance optimale de réalisation desdites pièces dans le respect des exigences fonctionnelles.

Avantageusement, le procédé objet de l'invention comprend, selon son deuxième perfectionnement, suite à l'étape f), une étape consistant à :

q. modifier la gamme d'assemblage et reprendre à l'étape l).

Ainsi, le procédé permet non seulement d'optimiser le tolérancement des pièces mais également d'optimiser la gamme d'assemblage de sorte à trouver le couple tolérancement et gamme d'assemblage le plus favorable.

La réalisation du procédé objet de l'invention est avantageusement conduite lorsque les points de structure et les points d'assemblage de la première pièce sont des nœuds d'un maillage et que la raideur est calculée par un modèle d'éléments finis utilisant ledit maillage. Ainsi il est possible de mettre en œuvre le procédé par l'intermédiaire d'un calcul de déformée basé sur les différences finies ou les éléments finis.

Selon le mode de réalisation le plus répandu, le système de sollicitation initial est la pesanteur.

L'invention est décrite ci-après selon ses modes de réalisation préférés, nullement limitatifs et par les figures 1 à 7 dans lesquelles :

- la figure 1 représente schématiquement de profil un exemple d'assemblage de deux tronçons d'aéronef ;
- la figure 2 représente selon une perspective en vue de dessus et de face un exemple de représentation géométrique d'un modèle de comportement d'un tronçon d'aéronef utilisé pour mettre en, œuvre le procédé objet de l'invention selon un de ses modes de réalisation ;
- la figure 3 représente selon la même vue que la figure 2 la représentation géométrique de deux maquettes numériques de tronçon d'aéronef au cours de la mise en œuvre du procédé objet de l'invention ;
- la figure 4 représente en perspective selon une vue de profil la matérialisation du contour d'une maquette numérique d'un tronçon d'aéronef compris dans des limites de tolérance IT de contour ;
- la figure 5 montre un logigramme d'un mode de réalisation du procédé objet de l'invention ;
- la figure 6 est un exemple illustrant le principe de distorsion du maillage d'une pièce en vue de simuler des défauts de fabrication dans la forme de celle-ci, illustré sur le cas d'une pièce de type poutre ;
- et la figure 7 illustre différents cas de déformées cumulable pour générer des pièces de type coque simulant la présence de défauts de fabrication.

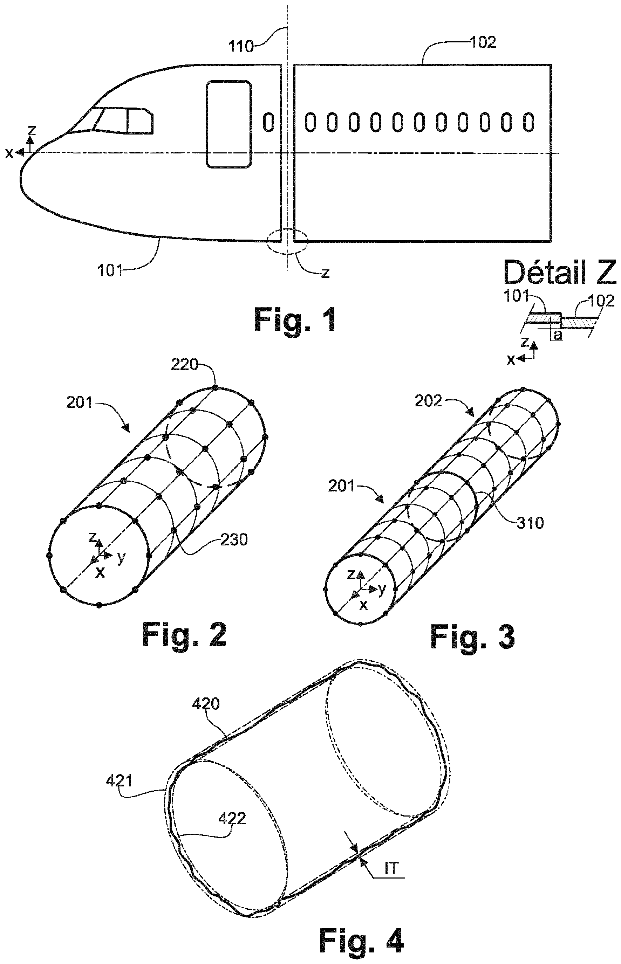

Figure 1, selon un exemple de réalisation, le procédé objet de l'invention peut être appliqué à l'optimisation du tolérancement des tronçons d'un aéronef en vue de leur assemblage. Le fuselage d'un aéronef, ici un avion, est constitué de tronçons (101, 102) dont la forme peut être appréciée comme sensiblement cylindrique sans que ceci ne constitue une limitation, et s'étendant selon un axe « x », dit longitudinal. La juxtaposition selon cet axe longitudinal et l'assemblage desdits tronçons permet de constituer le fuselage de l'aéronef. Selon cet exemple de réalisation, correspondant à un avion moyen porteur monocouloir, le diamètre des tronçons au niveau de l'interface d'assemblage (110) est de l'ordre de quatre mètres. Les tronçons sont, par exemple, constitués d'un assemblage de panneaux raidis, comportant une peau en matériau métallique ou composite dont l'épaisseur est couramment comprise entre 2 mm et 5 mm, rigidifiée par des raidisseurs longitudinaux, parallèles à l'axe x, couramment désignés comme des lisses, et des raidisseurs circonférentiels, ou cadres s'étendant selon le périmètre du fuselage dans une section transversale à l'axe longitudinal. Les Lisses sont couramment réparties selon un pas circonférentiel compris entre 150 mm et 200 mm et les cadres, répartis selon un pas longitudinal compris entre 500 mm et 1 m. Compte tenu des dimensions du tronçon et de sa constitution, ledit tronçon présente une certaine flexibilité, qui, sous l'effet du propre poids du tronçon peut conduire localement à des déformations de celui-ci dont l'ordre de grandeur est compris entre 1/1000ème et 1/10000ème de ses dimensions extérieures. Dans cet exemple d'application du procédé, la flexibilité locale du tronçon est de l'ordre du millimètre.

Détail Z, les tronçons doivent être assemblés dans le respect de contraintes ou d'exigences fonctionnelles, notamment géométriques, qui font l'objet d'un tolérancement. À titre d'exemple, non limitatif, une telle contrainte peut concerner l'affleurement radial a des tronçons ainsi assemblés. Selon cet exemple, l'affleurement est parfait lorsque la condition $a=0$ est vérifiée sur tout le périmètre d'assemblage. Lorsque a diffère de 0, alors, ce désaffleurement génère une traînée aérodynamique supplémentaire lorsque l'aéronef est en vol, laquelle traînée aérodynamique conduit à une consommation accrue de carburant, de sorte que pour éviter ces effets néfastes, la valeur de a doit être contenue dans une plage de tolérance généralement de l'ordre du millimètre. Une contrainte géométrique telle que a est couramment dénommée « cote condition » selon l'art antérieur. Le respect de cette cote condition est le résultat d'une chaîne de cotes, c'est-à-dire une somme vectorielle de cotes caractéristiques des pièces assemblées. Dans le cadre d'une fabrication en série, chacune de ces cotes est affectée d'une dispersion ou variabilité qui est engendrée par la variabilité des moyens de fabrication des pièces élémentaires constituant les tronçons, et de la variabilité du respect des cotes conditions au cours des assemblages successifs de ces pièces élémentaires aboutissant à l'assemblage visé.

La variabilité de réalisation est prise en compte en affectant à chacune des cotes de la chaîne un intervalle de tolérance représentant la plage de dispersion admissible de ladite cote. Selon l'art antérieur, pour assurer le respect de la cote condition quels que soient les tronçons assemblés et quelque soit les pièces élémentaires constituant ces tronçons, il faut que la plage de tolérance de la cote condition soit plus large que la somme des amplitudes des intervalles de tolérance des cotes de la chaîne définissant ladite cote condition. Si cette équation est respectée, alors n'importe quel premier tronçon (101) peut être assemblé avec n'importe quel deuxième tronçon (102) dans le respect de la cote condition. Dans le cas de l'assemblage de tronçons d'aéronef, ceux-ci sont constitués de plusieurs milliers de pièces. La cote condition a de cet exemple étant de l'ordre du millimètre, les tolérances de fabrication admissibles des pièces et sous-ensembles constituant ledit tronçon, devraient être de l'ordre du micromètre ($10^{-6}$ mètres) ce qui est irréalisable. Dans cette impossibilité d'interchangeabilité, les assemblages peuvent cependant être réalisés dans le respect des cotes conditions mais nécessitent alors un appairage des pièces. C'est-à-dire que chaque premier tronçon (101) est susceptible d'être assemblé avec un nombre limité de deuxièmes tronçons (102) avec lesquels le respect de la contrainte ou cote condition sera assuré. Cette méthode, utilisée industriellement le plus souvent pour des pièces élémentaires, conduit inévitablement à du rebut, certaines pièces ne pouvant être assemblées avec aucune autre. Par ailleurs cette méthode nécessite un stock de pièces de chaque catégorie, pour obtenir une espérance statistique suffisante que chaque pièce puisse être associée à une autre, elle est donc peu compatible avec les méthodes de production en flux tendus.

Concrètement, en présence de pièces de grande dimension, telles que des tronçons d'aéronef, ceux-ci sont placés pour leur assemblage sur des outillages disposant d'une possibilité d'orientation dans l'espace desdits tronçons. Ainsi, pour un couple de tronçons donné, il est procédé à un réglage de leurs orientations relatives après qu'ils aient été mesurés, ces orientations relatives étant optimales pour placer les différentes cotes conditions, ou contraintes, dans leur intervalle de tolérance. Cette première approche permet de trouver une solution d'assemblage satisfaisante de deux tronçons dans une grande majorité de cas. Cependant, elle se traduit, en contrepartie, par un temps de cycle supplémentaire correspondant au temps de mesure et d'orientation relative des tronçons. Or, les tronçons présentent une certaine flexibilité, ceux-ci se déforment de manière sensiblement différente en fonction de leur orientation dans l'espace, de sorte que le positionnement relatif théorique peut nécessiter des mises au point pour tenir compte de ces déformations. Le procédé décrit dans la demande brevet FR-A-2940375 apporte une réponse optimale à cette situation. Ce procédé de l'art antérieur permet de trouver une solution d'assemblage optimale dans une situation concrète fixée, où deux tronçons physiques, présentant leurs défauts de fabrication sont en présence. Même si dans de nombreux cas la solution d'assemblage est trouvée par ce procédé de l'art antérieur, rien ne permet d'assurer qu'une telle solution peut effectivement être déterminée avant de mettre en œuvre le procédé. A contrario, dans la mesure où une solution d'assemblage peut être déterminée dans la quasi-totalité des assemblages, la question se pose de savoir s'il eut été possible d'admettre des tolérances de fabrication plus larges des tronçons, ce qui aurait un effet très favorable sur leur coût de fabrication. La question peut également être posée de savoir s'il eut été possible d'élargir la tolérance de fabrication de certaines pièces ou sous ensembles et de réduire la tolérance de fabrication d'autres sous ensembles pour aboutir, à la fois, à une espérance statistique plus élevée d'assemblage dans le respect des exigences fonctionnelles et à une réduction des coûts de fabrication. Or, ces tolérancements ne peuvent pas être ajustés au moment de l'assemblage, les tronçons étant déjà fabriqués, mais sont fixés au moment de la conception.

Le procédé objet de l'invention vise à répondre à ces questions, y compris au stade initial de la conception, où les sous ensembles et pièces élémentaires constituant les tronçons, ou d'une manière plus générale les pièces à assembler, n'existent pas physiquement et ne peuvent pas être mesurées.

Figure 2 et figure 3, le procédé objet de l'invention considère les maquettes numériques (201, 202) structurales des tronçons à assembler. Les dites maquettes numériques (201, 202) structurales sont constituées des informations suivantes :

- une pluralité de points dits d'assemblage (220) ;
- une pluralité de points dits de structure (230) ;
- des relations mathématiques, dites raideur mécanique, telles qu'un déplacement relatif non nul d'un point de structure (230) ou d'assemblage (220) par rapport aux autres points de structure ou d'assemblage d'une même maquette numérique modifie un tenseur en chacun de ces points. D'un point de vue mécanique ces relations mathématiques expriment l'existence d'une force de rappel élastique entre les points (220, 230) constituant la maquette numérique (201, 202). Le qualificatif « structural » se réfère à la prise en compte de cette flexibilité.

Les points d'assemblage et de structure sont définis par leur position dans un repère *(x, y, z)* attaché à la maquette du tronçon (201, 202) considéré. Les points d'assemblage et de structure ne diffèrent pas dans leur nature au niveau de la maquette. La qualification « assemblage » ou « structure » est déterminée par la mise en œuvre du procédé. En effet, figure 3, les points (220) dits d'assemblage sont mis en coïncidence par paire dont un point appartient à la première (201) maquette numérique et l'autre point à la deuxième (202) maquette numérique ainsi assemblées. Ainsi, l'opération d'assemblage, au sens du procédé objet de l'invention, consiste à appliquer à l'ensemble des points d'assemblage, situés sur l'interface d'assemblage (310), de l'une et/ou de l'autre maquette numérique ainsi assemblées, un torseur de déplacement sorte à mettre les points d'assemblage (210), associés par paire, en coïncidence.

Selon les procédés de simulation ou d'optimisation de l'assemblage de l'art antérieur tels que décrit dans le document FR-A-2940375, l'assemblage est simulé par la mise en coïncidence des points d'assemblage et cette mise en coïncidence ne considère que des déplacements normaux à la surface d'assemblage des points d'assemblage, d'une part, et sans gestion des contacts, d'autre part. Ainsi le procédé de simulation d'assemblage de l'art antérieur, par la prise en compte des seuls déplacements normaux, ne permet pas d'anticiper un assemblage présentant des désaxement des points d'assemblage, comme on peut le trouver dans le cas d'un assemblage dit mécano, et d'autre part, par la non-gestion des contacts, ne permet pas de simuler une gamme d'assemblage, c'est-à-dire des séquences ordonnées de mise en coïncidence et de fixation des points d'assemblages des deux maquettes numériques, les points ainsi préalablement assemblés influençant le comportement mécanique des pièces lors de l'assemblage des points subséquent. Ainsi, en partant du procédé de simulation de l'assemblage décrit dans le document FR-A-2940375, la réalisation d'un procédé d'optimisation du tolérancement de pièces flexibles implique la résolution de plusieurs problèmes techniques selon la finesse de résolution recherchée et la complexité de l'opération d'assemblage étudiée. Ces problèmes techniques essentiels sont au nombre de quatre :

- définir un moteur d'optimisation à partir de pièces simulées ;
- générer des maquettes numériques représentatives de la variabilité de réalisation des pièces ;
- intégrer l'influence des défauts tangentiels de positionnement des points d'assemblage à l'interface d'assemblage ;
- intégrer l'influence des contacts pour prendre en compte les gammes d'assemblages.

Le premier problème technique est résolu en définissant et en calculant des coefficients d'influence entre les défauts des pièces, c'est-à-dire des maquettes numériques et la réalisation des cotes conditions. Le problème d'optimisation est ainsi ramené à un problème linéaire.

Le deuxième de ces problèmes techniques consiste à définir des distorsions des maquettes numériques qui soient mécaniquement admissibles, ce problème est résolu en faisant appel à des vecteurs de distorsion, par exemple représentatifs des modes vibrations transversales des pièces en présence qui peuvent être superposés, les coefficients d'influence étant calculé par rapport à ces vecteurs de distorsion. Le troisième problème technique est résolu en utilisant une réactualisation de la matrice de rigidité des maquettes numériques et le quatrième problème technique est résolu selon l'invention en calculant les coefficients d'influence par une approche statistique.

Selon un mode de réalisation préféré, les maquettes numériques sont des modèles en éléments finis des pièces (201, 202) à assembler.

Figure 4, le contour (420) de chaque maquette numérique d'assemblage est compris entre deux contours (421, 422) parallèles au contour nominal de la maquette et distants de l'intervalle de tolérance IT. Dans le cas de tronçons cylindriques cette plage de tolérance est délimitée par deux cylindres coaxiaux centrés sur le cylindre correspondant au tronçon nominal.

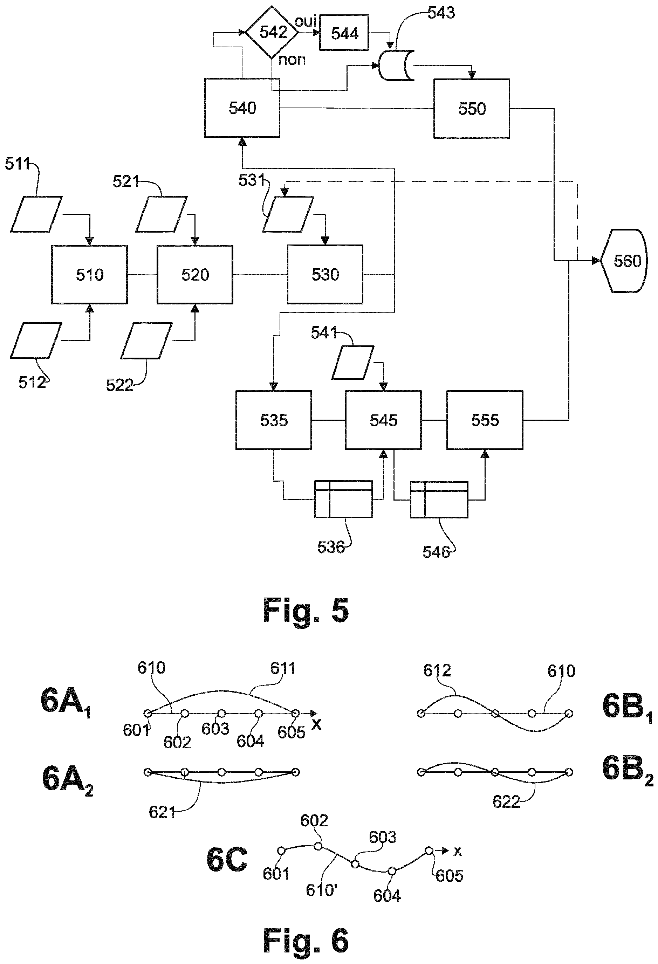

Figure 5, selon un exemple de réalisation, le procédé objet de l'invention, consiste à acquérir au cours d'une première étape (510) d'initialisation un ensemble de points $Pi$ de structure (230) et d'assemblage (220) d'un premier tronçon (201). Cette acquisition consiste à obtenir un fichier de données (511) associant pour chaque point $Pi$ de la maquette numérique un triplet $(x_i, y_i, z_i)$ correspondant à ses coordonnées théoriques dans un repère $(x,y,z)$ attaché à ladite maquette numérique. Par coordonnées théoriques, il faut comprendre la position de ce point telle qu'elle est prévue si la pièce dont il fait partie est réalisée de manière parfaite, c'est-à-dire que toutes ces cotes de fabrication sont réalisées à leur valeur nominale. Au cours de cette même étape d'initialisation, un fichier (512) comprenant des coefficients de raideur associés aux différents points est également acquis. Ces coefficients de raideur sont fonction des matériaux constituant la pièce.

Au cours d'une étape de construction (520) un modèle en éléments finis de la pièce est construit à partir des données acquises au cours de l'étape d'initialisation (510). Dans ce modèle, les points $Pi$ constituent les nœuds d'un maillage, les coefficients de raideur constituent une matrice raideur $[K]$ associée à ce maillage.

À cette modélisation mécanique de la pièce, sont associés des conditions aux limites (521) et un chargement initial (522). Ces conditions (521, 522) permettent de représenter l'environnement d'assemblage des pièces, notamment les montages d'assemblage et un champ de sollicitation tel que la pesanteur. Les conditions aux limites sont exprimées en chacun des nœuds d'intérêt du maillage et consistent classiquement à bloquer des mouvements de ces nœuds, à imposer un déplacement ou à définir une force extérieure de rappel de ce nœud lorsque celui-ci s'éloigne d'une position donnée. Le champ de sollicitation, décrit par un fichier (522) définissant un vecteur de chargement, est appliqué au modèle élément finis de la pièce avec ses conditions aux limites, et va donc conduire à une déformation élastique de celle-ci, c'est-à-dire un déplacement des nœuds engendrant des forces intérieures et des forces extérieures au niveau des nœuds soumis à des conditions aux limites. Ainsi, le procédé objet de l'invention permet de tenir compte notamment de l'orientation des pièces lors de l'assemblage et de l'influence de cette orientation lorsque la pièce est soumise notamment à la pesanteur et de différencier, par exemple, un assemblage où l'axe $x$ des pièces est orienté horizontalement et un assemblage où l'axe $x$ des pièces assemblées est orienté verticalement.

Préalablement à l'assemblage, une étape de distorsion du maillage (530) est réalisée. À cette fin, les pièces sont déformées en imposant un déplacement des nœuds constituant le modèle selon un vecteur de déplacement généralisé $\{U\}$. L'étape de distorsion (530) reçoit à cette fin en entrée des données (531) sur ledit vecteur de déplacement.

Figure 6, le principe de distorsion est explicité dans le cas d'une poutre droite pour en simplifier la représentation. Selon cet exemple de réalisation, le défaut $u$ en chaque point est déterminé par un champ d'écart unitaire $v_n$ fonction de la position spatiale du point considéré, c'est-à-dire de sa coordonnée $x$ dans l'exemple simplifié de la figure 6. Plusieurs champs $v_n$ peuvent être superposés chacun des champs pouvant être amplifié par un facteur $\delta_n$.

Ainsi le déplacement des points est déterminé par l'équation :

$$u(x) = \sum_{n=1}^{N} v_n(x) . \delta_n$$

Ainsi, figure 6A partant d'une pièce (610) initialement rectiligne modélisée par des éléments poutre comportant 5 nœuds (601, 602, 603, 604, 605), un premier champ de déplacement (611) des points conduisant à un premier type de distorsion est appliqué figure 6A$_1$, et amplifié (621) par un facteur $\delta_1$, figure 6A$_2$. Figure 6B, un second champ de déplacement (612) des points conduisant à un deuxième type de distorsion est appliqué, figure 6B$_1$, et amplifié (622) par un facteur $\delta_2$, figure 6B$_2$. Les deux champs de déplacement sont additionnés, figure 6C, définissant ainsi un vecteur de déplacement $Ui$ en chaque point (601, 602, 603, 604, 605) du maillage, lequel vecteur de déplacement défini les nouvelles coordonnées des nœuds du nouveau maillage de la pièce (610'), correspondant à la forme de la pièce dont l'assemblage avec l'autre pièce va être simulé. Ainsi, selon cet exemple de réalisation les points d'extrémité (601, 605) sont déplacés d'un vecteur de longueur nulle. Les autres points (602, 603, 604) sont déplacés d'un vecteur perpendiculaire à l'axe x résultat de la somme des champs de déplacement unitaire amplifiés. Selon un exemple de déplacement plus complexe, applicable notamment sur des modèles en trois dimensions de type coque, les vecteurs de déplacement aux nœuds s'étendent selon les trois dimensions de l'espace normalement à la surface.

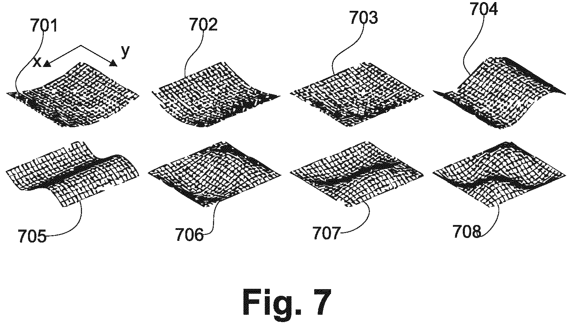

La figure 7 illustre un exemple d'application de cette méthode dans le cas d'un modèle coque et représente, 8 types de distorsions (701, 702, 703, 704, 705, 706, 707, 708) combinables, selon un exemple de réalisation du procédé objet de l'invention.

L'état de distorsion de la maquette peut être défini par la somme des effets de différents vecteurs de déplacement *Ui* caractérisés par leurs projections sur les axes *(x,y,z)* et leur point d'application. Avantageusement ces modes de distorsion correspondent aux modes de vibrations transversales de la pièce.

Les déplacements des nœuds engendrés par les vecteurs *Ui* restent compatibles avec l'hypothèse des petits déplacements et ils ne modifient pas la rigidité de la pièce, c'est-à-dire qu'ils ne modifient pas la matrice raideur *[K]* du modèle associé à ladite pièce lorsque les points d'assemblage et de structure sont dans leur position, ou coordonnées, nominales.

Selon ce premier mode de réalisation l'étape d'assemblage (540) consiste à mettre en coïncidence les points d'assemblage de deux modèles en éléments finis représentant respectivement chacune des pièces assemblées dans leur environnement, c'est-à-dire soumises à leurs conditions aux limites et au champ de sollicitation, mais sans tenir compte de la gamme d'assemblage ou des phénomènes de contact aux interfaces. Ce premier mode de réalisation permet de rester dans les hypothèses de linéarité, mais aussi de conserver la matrice raideur telle que définie précédemment qui reste toujours équivalente à la matrice raideur *[K]* de la maquette numérique non déformée. Par suite, selon ce mode de réalisation le problème est considérablement réduit. Ce mode de réalisation est utile notamment en première approximation ou première optimisation, et permet un calcul d'optimisation très rapide.

L'opération d'assemblage (540) consiste à imposer un déplacement *Vi* en chacun des points d'assemblage de l'une et/ou l'autre pièce de sorte à mettre lesdits points d'assemblage en coïncidence.

L'ensemble des déplacements *Vi* appliqués en chaque point d'assemblage est représenté par un vecteur généralisé d'assemblage *{V}*.

Les efforts *Fi* générés aux points d'assemblage *Pi* s'expriment par la relation linéaire *{F}=[K]{V}* où *[K]* est la matrice raideur.

L'étape d'identification (550) consiste à déterminer des coefficients d'influence permettant de lier les efforts en chacun des points d'assemblage et le déplacement des nœuds correspondant à ces points d'assemblage, au déplacement initial, ou vecteur de distorsion *{U}* appliqué lors de l'étape de distorsion (530) et d'établir des relations de type :

-     *{F}= [C]{U}* ; et
-     *{V}=[D]{U}*

Ainsi la force *Fi* générée au point d'assemblage *Pi* peut être exprimée en fonction du défaut initial *{U}* imposé par une expression de la forme

$$F_{ix} = C_{U/Fix} \times U$$

$$F_{iy} = C_{U/Fiy} \times U$$

$$F_{iz} = C_{U/Fiz} \times U$$

et de manière similaire, le déplacement au cours de l'opération d'assemblage d'un point d'assemblage Pj est exprimé par

$$V_{jx} = D_{Un/Vjx} \times U_n$$

$$V_{jy} = D_{Un/Vjy} \times U_n$$

$$V_{jz} = D_{Un/Vjz} \times U_n$$

Ces coefficients d'influence définissent ainsi un modèle linéaire (543) reliant les défauts initiaux des pièces, défauts représentés par le vecteur de déplacement généralisé *{U}*, aux efforts *{F}* et aux déplacements *{V}* nécessaires à la réalisation de l'assemblage.

La détermination de ces coefficients d'influence permet de réduire considérablement le problème puisqu'elle permet de calculer les efforts d'assemblage et le déplacement des points d'assemblage de la maquette numérique pour n'importe quel écart ou défaut initial, restant cependant dans l'hypothèse des petits déplacements et petites déformations. En quelque sorte, l'ensemble du comportement du tronçon au cours de l'assemblage est réduit à ses effets au niveau de l'interface, sous forme d'équations de formulation linéaire qui se prêtent particulièrement bien à une démarche d'optimisation. Cette mise en équation linéaire et la réduction du problème aux phénomènes à l'interface permettent d'étudier et d'optimiser ou de pré-optimiser les tolérances fabrication sur l'ensemble des pièces d'un assemblage complexe tout en réduisant à chaque itération le problème aux coefficients d'influence aux interfaces d'assemblage. Ainsi, il est notamment possible d'étudier la propagation des défauts au fur et à mesure de la simulation des différents assemblages. Cette réduction du problème permet de réaliser cette optimisation au moyen de ressources de calcul couramment disponibles et dans des temps de calcul raisonnables. En l'absence de cette réduction, la complexité du problème croît de manière exponentielle à chaque itération et devient rapidement hors d'atteinte des ressources de calcul disponibles d'un point de vue pratique.

L'optimisation (550) est réalisée à partir du modèle linéaire (543) en comparant les normes des vecteurs de déplacement ‖*V*‖ et force ‖*F*‖ avec des contraintes exprimées sous forme scalaire *Fmax* et *Vmax* en cherchant à maximiser la norme $\|U\|$ du vecteur de déplacement utilisé pour réaliser la distorsion de la pièce au cours de la dite étape de distorsion (530). La valeur de $\|U\|$ peut être pondérée par une fonction coût. La valeur de $\|U\|$ ainsi déterminée est affichée lors d'une étape d'affichage (560), elle peut alors être utilisée comme IT pour la réalisation pratique des pièces.

Cependant, cette méthode d'optimisation linéaire présente des limitations. En effet, une première limitation intervient lorsque la mise en coïncidence des points d'assemblage nécessite un déplacement de ces points tangentiellement aux surfaces d'assemblage. La rigidité des structures dans ce sens de sollicitation entraîne des efforts particulièrement importants, et les contraintes que ces efforts installent dans la structure modifient le comportement de ladite structure. La demanderesse a pu mettre en évidence que dans ces conditions, le principe de calcul linéaire exposé précédemment, pouvait toujours s'appliquer à condition de réactualiser les matrices raideurs des maquettes numériques structurales après assemblage. Cette réactualisation est intrinsèquement réalisée par la prise en compte du maillage déformé en lieu et place du maillage initial dans les modèles en éléments finis des pièces à assembler. Les coefficients d'influence sont alors calculés à partir de ces matrices raideur réactualisées. Ainsi, une étape d'analyse (542) définie si l'application d'un déplacement et/ou d'efforts tangentiellement à l'interface d'assemblage et nécessaire, et si une telle configuration est nécessaire, une étape (544) de réactualisation des matrices de rigidité est réalisée avant de procéder au calcul des coefficients d'influence.

Selon un mode de réalisation du procédé objet de l'invention permettant de prendre en compte tout type d'assemblage, l'opération de mise en coïncidence (545) est réalisée selon une gamme d'assemblage (541). Cette gamme d'assemblage reflète par exemple un ordre de mise en coïncidence des points d'assemblage, ou encore une opération préalable d'orientation des pièces l'une par rapport à l'autre avant la mise en coïncidence des points d'assemblage. Elle implique la gestion des contacts au niveau de l'interface, introduit par suite de l'hyperstatisme, des comportements non linéaires et de la modification des raideurs suite à la distorsion de la forme. Ainsi, le problème ne peut plus se réduire à une simple formulation linéaire, la dimension du problème d'optimisation et les ressources de calcul nécessaires à la conduite d'une telle optimisation devenant rapidement hors d'atteinte des moyens de calcul envisageables d'un point de vue pratique. L'invention consiste alors à conduire l'optimisation à partir de coefficients d'influence déterminés par une analyse statistique de résultats de simulations d'assemblage conduits en considérant la variabilité de fabrication des pièces dans un intervalle défini. Cette analyse statistique peut être conduite à partir de relevés de mesures réelles, mais dans le cas du procédé objet de l'invention, l'objectif est de conduire l'analyse au stade de la conception, aussi l'objet du procédé est-il notamment de construire une base statistique de simulation qui soit réaliste.

À cette fin, le procédé comprend une étape de génération (535). Cette étape prend en entrée les jeux de vecteur de déplacement $U_i$ de composantes ($\Delta x_i, \Delta y_i, \Delta z_i$) défini au cours de l'étape de distorsion (530), laquelle prend éventuellement pour entrée (531) la valeur de l'IT définie lors d'une optimisation linéaire (550) précédente. L'étape de génération (535) construit de manière aléatoire des pièces en appliquant des déplacements correspondant aux vecteurs $Ui$ en des points $Pi$ tel que lorsque l'origine dudit vecteur est placée sur le point $Pi$, en combinant des vecteurs de déplacement correspondants aux modes de vibration transversaux des pièces en question de sorte à générer des distorsions mécaniquement admissibles. Contrairement aux cas précédents ou une relation directe entre les vecteurs de distorsion et les coefficients d'influence est recherchée, ce mode de réalisation nécessite de simuler mécaniquement les assemblages à partir des modèles éléments finis des maquettes structurales en respectant la gamme d'assemblage. Ainsi, au cours d'une étape de génération (535), *N* maquettes numériques d'assemblage sont générées en déplaçant les points $Pi$ de la maquette numérique théorique acquise lors de l'étape d'initialisation (510) par les jeux de vecteurs $Ui$ générés de manière aléatoire. En pratique, *N* est de l'ordre de 1000.

Ces déplacements des points, qui prennent la forme d'un vecteur généralisé {U} sont réalisés avec ou sans rappel élastique. Les *N* maquettes générées correspondent à *N* vecteurs généralisés {Un}, n étant compris entre 1 et *N* et sont stockées dans un fichier (536).

Enfin, il faut déterminer les jeux initiaux entre les pièces de sorte à faire coïncider lesdites pièces au niveau des liaisons d'assemblage.

La simulation de l'assemblage dans ce cas général, entre deux pièces dont les termes correspondants sont identifiés par les suffixes 1 et 2, consiste à résoudre l'équation suivante :

$$\begin{bmatrix} K_1 & 0 & L_1 \\ 0 & K_2 & L_2 \\ L_1 & L_2 & 0 \end{bmatrix} \begin{Bmatrix} U_1 \\ U_2 \\ \lambda \end{Bmatrix} = \begin{Bmatrix} F_1 \\ F_2 \\ d \end{Bmatrix}$$

Où :

- $K_1$ et $K_2$ sont les matrices raideur actualisées, après distorsion des maillages respectifs, des deux pièces assemblées ;
- $L_1$ et $L_2$ sont des matrices booléennes sélectionnant dans chaque modèle des pièces objet de l'assemblage les degrés de libertés sujets à des conditions aux limites ou contraintes ;
- $\lambda$ est un vecteur comprenant des multiplicateurs de Lagrange utilisés dans le calcul pour prendre en compte les conditions aux limites et permettre de réaliser l'optimisation sous contrainte ;

- $F_1$ et $F_2$ correspondent aux efforts appliqués aux nœuds ;

- d est un vecteur dont les composantes contiennent les jeux initiaux entre les pièces I et II.

Le résultat issu de la résolution de ce système consiste en des vecteurs qui correspondent aux déplacements à appliquer aux nœuds des modèles de pièces non assemblés, mais distordus, pour que les dits nœuds atteignent leur position d'assemblage.

Ainsi, les maquettes numériques (536) générées sont assemblées, au cours d'une étape d'assemblage (545), en appliquant aux points d'assemblage des torseurs de déplacement successifs représentatifs de la gamme d'assemblage Pour chaque assemblage ainsi réalisé un paramètre D scalaire représentatif de l'exigence fonctionnelle est estimé en chacun des points d'assemblage de l'interface et pour chacun des cas d'assemblage. Ainsi, chaque cas d'assemblage est caractérisé par un paramètre Dmax correspondant à l'écart maximum constaté sur l'ensemble des points de l'interface entre le nominal de l'exigence fonctionnelle et la valeur du paramètre D. Le scalaire D peut être de toute nature, mesurable à partir de la simulation en éléments finis : distance, force, contrainte ou déformation sans que cette énumération ne soit limitative, et ainsi refléter différents types d'exigences fonctionnelles, y compris des exigences non vérifiables en situation réelle de production, tel qu'un niveau de contrainte. Plusieurs paramètres D correspondant à plusieurs types d'exigences fonctionnelles peuvent ainsi être déterminés pour chaque cas d'assemblage.

Avantageusement une fonction coût peut être associée à chaque paramètre D de sorte à pondérer l'écart Dmax et créer une variable d'intérêt.

L'ensemble de ces étapes (530, 535, 545) se déroule de manière automatique. L'optimisation est réalisée sur un fichier de résultats (546) généré à l'issue de l'étape de simulation d'assemblage (545). L'étape d'optimisation (555) est réalisée en identifiant les coefficients d'influence par une méthode dite de Monte Carlo à partir dudit fichier de résultats (546).

Le fichier de résultats (546) contient de ce fait une cartographie des valeurs Dmax en fonction de vecteurs généralisés {Un} de défauts initiaux pour une gamme donnée. Les étapes peuvent être renouvelées pour d'autres données d'entrée, telles qu'une autre gamme ou un autre positionnement initial afin que l'optimisation statistique porte également sur ces paramètres.

Les séquences d'optimisation se terminent par l'affichage de la valeur ||U|| correspondant à la valeur maximale admissible pour la norme du vecteur de distorsion généralisé dans le respect de Dmax < $D_{adm}$, $D_{adm}$ étant l'exigence fonctionnelle correspondant au paramètre D étudié. Cette valeur de ||U|| est alors affichée (560) et peut servir de préconisation comme valeur IT pour la fabrication des pièces étudiées.

La description et les exemples de réalisation ci-avant montrent clairement l'adéquation de l'invention aux objectifs visés en particulier, le procédé objet de l'invention permet de définir, au stade de la conception, un tolérancement optimal de pièces flexibles en, fonction de leur gamme d'assemblage et des exigences fonctionnelles visées.

**Revendications**

1.  Procédé pour la détermination d'un intervalle de tolérance (IT) optimal pour la réalisation d'une première pièce (101) devant être assemblée avec une deuxième pièce (102) selon des surfaces d'interface et dans le respect d'une exigence fonctionnelle *(a)* d'assemblage, lesdites pièces étant représentées par leurs maquettes numériques structurales, ledit procédé comprenant les étapes consistant à :

    a. acquérir (510) la position théorique nominale (511) d'une pluralité de points (220), dits d'assemblage, sur les surfaces d'interface des maquettes numériques (201, 202) de la première et de la deuxième pièce ;
    b. acquérir (510) la position théorique nominale (511) d'une pluralité de points (230), dits de structure, répartis sur les surfaces des maquettes numériques (201, 202) de la première et de la deuxième pièce ;
    c. acquérir (510) pour les pluralités de points Pi d'assemblage et de structure des maquettes numériques de la première et de la deuxième pièce une raideur mécanique de rappel en sa position initiale sous la forme d'une matrice de rigidité [K] (512) ;
    d. acquérir la définition d'une variable, dite variable d'intérêt comprenant une variable scalaire représentative de l'exigence fonctionnelle d'assemblage et une fonction coût donnant la valeur de la variable d'intérêt en fonction de l'écart de la variable scalaire par rapport au nominal de l'exigence fonctionnelle d'assemblage ;
    e. acquérir (530) un jeu de vecteurs de distorsion des maquettes numériques de la première et de la deuxième pièce, lesdits vecteurs étant normaux aux surfaces desdites maquettes ;

    ledit procédé étant **caractérisé en ce qu'**il comprend les étapes suivantes :

    f. calculer (550) des coefficients d'influence (543) mettant en relation linéaire chaque vecteur de distorsion à la valeur de la variable d'intérêt lorsque la maquette numérique d'une pièce, distordue par un tel vecteur, est assemblée avec la maquette numérique de l'autre pièce théorique nominale, l'assemblage étant simulé par la mise en coïncidence des points d'assemblage des deux maquettes numériques pour fournir une tolérance (IT) optimale de réalisation de la première et de la deuxième pièce (101, 102) dans le respect des exigences fonctionnelles (*a*) d'assemblage,

g. choisir les dispositifs de mise en position et les outillages d'assemblage pour assembler la première et la deuxième pièce (101, 102) fabriquées en accord avec la tolérance (IT) optimale de réalisation de la première et de la deuxième pièce (101, 102),

h. assembler la première et la deuxième pièce (101, 102) fabriquées en accord avec la tolérance (IT) optimale de réalisation de la première et de la deuxième pièce (101, 102) en utilisant les dispositifs de mise en position choisis et les outillages d'assemblage choisis.

2. Procédé selon la revendication 1, **caractérisé en ce que** les combinaisons de vecteurs de distorsion reproduisent les modes propres (701... 708) de vibrations transversales de la pièce.

3. Procédé selon la revendication 1, **caractérisé en ce que** les points d'assemblage des deux maquettes numériques présentent des écarts tangentiels aux surfaces d'assemblage, et qu'il comprend après l'étape f) une étape consistant à :

i. réactualiser (544) la matrice de rigidité des maquettes numériques déformées lors de la simulation de l'assemblage.

4. Procédé selon la revendication 1, **caractérisé en ce qu'**il comprend entre les étapes e) et f) des étapes consistant à :

j. acquérir une gamme d'assemblage des maquettes numériques ;
k. générer une pluralité de premières et deuxièmes maquettes numériques distordues par des combinaisons de vecteurs de distorsion définis à l'étape e) ;
l. réaliser les assemblages des différentes maquettes numériques ainsi générées selon la gamme d'assemblage ;
m. déterminer pour chaque cas d'assemblage ainsi réalisé la variable d'influence ;

le calcul des coefficients d'influence de l'étape f) étant réalisé par une méthode dite de Monte Carlo, à partir des résultats de l'étape m).

5. Procédé selon la revendication 1, **caractérisé en ce qu'**il comprend entre les étapes e) et f) des étapes consistant à :

n. acquérir un système de positionnement initial et un système de sollicitation initial des maquettes numériques ;
o. calculer le déplacement, depuis leur position initiale, des points d'assemblage et des points de structure de la maquette numérique dans son système de positionnement initial et soumise à son système de sollicitation initial.

6. Procédé selon la revendication 5, **caractérisé en ce qu'**il comprend, suite à l'étape f) une étape consistant à :
p. modifier le système de positionnement ou le système de chargement initial de l'étape n) et reconduire l'étape f) avec ces nouvelles conditions initiales.

7. Procédé selon la revendication 4, **caractérisé en ce qu'**il comprend suite à l'étape f), une étape consistant à :
q. modifier la gamme d'assemblage et reprendre à l'étape I).

8. Procédé selon la revendication 1, **caractérisé en ce que** les points de structure et les points d'assemblage de la première pièce sont des nœuds d'un maillage et que la raideur est calculée par un modèle d'éléments finis utilisant ledit maillage.

9. Procédé selon la revendication 5, **caractérisé en ce que** le système de sollicitation initial est la pesanteur.

**Patentansprüche**

1. Verfahren zur Bestimmung eines optimalen Toleranzintervalls (IT) für die Herstellung eines ersten Teils (101), das mit einem zweiten Teil (102) an Schnittstellenflächen und unter Einhaltung einer funktionalen Anforderung (a) an den Zusammenbau zusammengebaut werden muss, wobei die Teile durch ihre numerischen Strukturmodelle dargestellt sind, wobei das Verfahren die folgenden Schritte umfasst:

a. Erfassen (510) der theoretischen Nominalposition (511) mehrerer sogenannter Montagepunkte (220) auf den Schnittstellenflächen der numerischen Modelle (201, 202) des ersten und des zweiten Teils;
b. Erfassen (510) der theoretischen Nominalposition (511) mehrerer sogenannter Strukturpunkte (230), die auf den Flächen der numerischen Modelle (201, 202) des ersten und des zweiten Teils verteilt sind;
c. Erfassen (510), für die mehreren Montage- und Strukturpunkte *Pi* der numerischen Modelle des ersten und des zweiten Teils, einer auf Rückstellung in deren Ausgangsposition gerichteten mechanischen Steifigkeit in Form einer Steifigkeitsmatrix *[K]* (512);

d. Erfassen der Definition einer Variablen, interessierende Variable genannt, welche eine skalare Variable, die für die funktionale Anforderung an den Zusammenbau repräsentativ ist, und eine Kostenfunktion, die den Wert der interessierenden Variablen in Abhängigkeit von der Abweichung der skalaren Variablen vom Nominalwert der funktionalen Anforderung an den Zusammenbau angibt, umfasst;

e. Erfassen (530) eines Satzes von Distorsionsvektoren der numerischen Modelle des ersten und des zweiten Teils, wobei die Vektoren normal zu den Flächen der Modelle sind,

wobei das Verfahren **dadurch gekennzeichnet ist, dass** es die folgenden Schritte umfasst:

f. Berechnen (550) von Einflusskoeffizienten (543), welche eine lineare Beziehung jedes Distorsionsvektors zum Wert der interessierenden Variablen herstellen, wenn das numerische Modell eines Teils, das durch einen solchen Vektor deformiert wird, mit dem nominalen theoretischen numerischen Modell des anderen Teils zusammengebaut wird, wobei der Zusammenbau durch die Herstellung einer Übereinstimmung der Montagepunkte der zwei numerischen Modelle simuliert wird, um eine optimale Toleranz (IT) der Herstellung des ersten und des zweiten Teils (101, 102) unter Einhaltung der funktionalen Anforderungen (a) an den Zusammenbau zu liefern,

g. Wählen der Vorrichtungen zur Positionierung und der Montagewerkzeuge zum Zusammenbauen des ersten und des zweiten Teils (101, 102), die im Einklang mit der optimalen Toleranz (IT) der Herstellung des ersten und des zweiten Teils (101, 102) gefertigt wurden,

h. Zusammenbauen des ersten und des zweiten Teils (101, 102), die im Einklang mit der optimalen Toleranz (IT) der Herstellung des ersten und des zweiten Teils (101, 102) gefertigt wurden, unter Verwendung der gewählten Vorrichtungen zur Positionierung und der gewählten Montagewerkzeuge.

2. Verfahren nach Anspruch 1, **dadurch gekennzeichnet, dass** die Kombinationen von Distorsionsvektoren die Eigenmoden (701...708) von Transversalschwingungen des Teils reproduzieren.

3. Verfahren nach Anspruch 1, **dadurch gekennzeichnet, dass** die Montagepunkte der zwei numerischen Modelle tangentiale Abweichungen an den Montageflächen aufweisen, und dass es nach Schritt f) einen Schritt umfasst:

i. Aktualisieren (544) der Steifigkeitsmatrix der numerischen Modelle, die bei der Simulation des Zusammenbaus deformiert wurden.

4. Verfahren nach Anspruch 1, **dadurch gekennzeichnet**, zwischen den Schritten e) und f) folgende Schritte umfasst:

j. Erfassen eines Montageplans der numerischen Modelle:

k. Erzeugen mehrerer erster und zweiter numerischer Modelle, die durch Kombinationen von in Schritt e) definierten Distorsionsvektoren verformt sind;

l. Realisieren der Montagen der so erzeugten verschiedenen numerischen Modelle gemäß dem Montageplan;

m. Bestimmen der Einflussvariablen für jeden so realisierten Montagefall;

wobei die Berechnung der Einflusskoeffizienten von Schritt f) durch eine sogenannte Monte-Carlo-Methode ausgehend von den Ergebnissen von Schritt m) durchgeführt wird.

5. Verfahren nach Anspruch 1, **dadurch gekennzeichnet, dass** es zwischen den Schritten e) und f) folgende Schritte umfasst:

n. Erfassen eines Systems der Anfangspositionierung und eines Systems der Anfangsbeanspruchung der numerischen Modelle;

o. Berechnen der Verlagerung, aus ihrer Anfangsposition, der Montagepunkte und der Strukturpunkte des numerischen Modells in seinem System der Anfangspositionierung und unter der Einwirkung seines Systems der Anfangsbeanspruchung.

6. Verfahren nach Anspruch 5, **dadurch gekennzeichnet, dass** es im Anschluss an Schritt f) folgenden Schritt umfasst:

p. Modifizieren des Systems der Anfangspositionierung oder des Systems der Anfangsbelastung von Schritt n) und erneutes Durchführen von Schritt f) mit diesen neuen Anfangsbedingungen.

7. Verfahren nach Anspruch 4, **dadurch gekennzeichnet, dass** es im Anschluss an Schritt f) folgenden Schritt umfasst:

q. Modifizieren des Montageplans und erneutes Durchführen der Schritte ab Schritt l).

8. Verfahren nach Anspruch 1, **dadurch gekennzeichnet, dass** die Strukturpunkte und die Montagepunkte Knoten eines Maschennetzes sind und dass die Steifigkeit durch ein Finite-Elemente-Modell unter Verwendung dieses Maschennetzes berechnet wird.

**9.** Verfahren nach Anspruch 5, **dadurch gekennzeichnet, dass** das System der Anfangsbeanspruchung die Schwerkraft ist.

## Claims

**1.** Method for the determination of an optimal tolerance interval (TI) for the production of a first part (101) having to be assembled with a second part (102) according to interface surfaces and in compliance with an assembly functional requirement (a), said parts being represented by their structural digital mockups, said method comprising the steps consisting in:

a. acquiring (510) the nominal theoretical position (511) of a plurality of so-called assembly points (220) on the interface surfaces of the digital mockups (201, 202) of the first and of the second part;

b. acquiring (510) the nominal theoretical position (511) of a plurality of so-called structure points (230) distributed over the surfaces of the digital mockups (201, 202) of the first and of the second part;

c. acquiring (510) for the pluralities of assembly points and structure points $Pi$ of the digital mockups of the first and of the second part a mechanical restoring stiffness for return to its initial position in the form of a rigidity matrix $[K]$ (512);

d. acquiring the definition of a variable, called the variable of interest, comprising a scalar variable representative of the assembly functional requirement and a cost function giving the value of the variable of interest as a function of the discrepancy of the scalar variable with respect to the nominal of the assembly functional requirement;

e. acquiring (530) a set of distortion vectors of the digital mockups of the first and of the second part, said vectors being normal to the surfaces of said mockups;

said method being **characterized in that** it comprises the following steps:

f. computing (550) influence coefficients (543) linearly relating each distortion vector to the value of the variable of interest when the digital mockup of a part, distorted by such a vector, is assembled with the digital mockup of the other nominal theoretical part, the assembly being simulated by placing the points of assembly of the two digital mockups in coincidence so as to provide an optimal tolerance (IT) of production of the first and of the second part (101, 102) in compliance with the functional assembly requirements (a),

g. choosing the positioning devices and the assembly tooling so as to assemble the first and the second part (101, 102) manufactured in accordance with the optimal tolerance (IT) of production of the first and of the second part (101, 102),

h. assembling the first and the second part (101, 102) manufactured in accordance with the optimal tolerance (IT) of production of the first and of the second part (101, 102) using the chosen positioning devices and the chosen assembly tooling.

**2.** Method according to Claim 1, **characterized in that** the combinations of distortion vectors reproduce the natural modes (701... 708) of transverse vibrations of the part.

**3.** Method according to Claim 1, **characterized in that** the assembly points of the two digital mockups exhibit discrepancies tangential to the assembly surfaces, and **in that** it comprises after step f) a step consisting in:

i. updating (544) the rigidity matrix of the digital mockups deformed during the simulation of the assembly.

**4.** Method according to Claim 1, **characterized in that** between steps e) and f) comprises steps consisting in:

j. acquiring an assembly range for the digital mockups;

k. generating a plurality of first and second digital mockups distorted by combinations of distortion vectors defined in step e);

l. carrying out the assemblies of the various digital mockups thus generated according to the assembly range;

m. determining for each case of assembly thus carried out the influence variable;

the computation of the influence coefficients of step f) being carried out by a so-called Monte Carlo procedure, on the basis of the results of step m).

**5.** Method according to Claim 1, **characterized in that** between steps e) and f) it comprises steps consisting in:

n. acquiring an initial positioning system and an initial stressing system for the digital mockups;

o. computing the displacement, from their initial position, of the assembly points and of the structure points of the digital mockup in its initial positioning system and subjected to its initial stressing system.

6. Method according to Claim 5, **characterized in that** it comprises, subsequent to step f), a step consisting in:

   p. modifying the initial loading system or positioning system of step n) and repeating step f) with these new initial conditions.

7. Method according to Claim 4, **characterized in that** it comprises, subsequent to step f), a step consisting in:

   q. modifying the assembly range and resuming at step l).

8. Method according to Claim 1, **characterized in that** the structure points and the assembly points of the first part are nodes of a mesh and **in that** the stiffness is computed by a finite element model using said mesh.

9. Method according to Claim 5, **characterized in that** the initial stressing system is gravity.

Fig. 1

Détail Z

Fig. 2

Fig. 3

Fig. 4

**Fig. 5**

**Fig. 6**

701 702 703 704

705 706 707 708

**Fig. 7**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• FR 2940375 A

**Littérature non-brevet citée dans la description**

• *Flexible tolerancing: A first step towards the use of nonlinear simulation of assembly*